# EUROPÄISCHE PATENTSCHRIFT

(11) **EP 2 262 742 B1**
(45) Veröffentlichungstag und Bekanntmachung des Hinweises auf die Patenterteilung: **29.02.2012**
(21) Anmeldenummer: 09721426.6
(22) Anmeldetag: 19.03.2009
(51) Int. Cl.: C03B 5/235, C03B 5/42, F27D 1/00

(54) **VERFAHREN ZUR OPTIMIERUNG EINER OFENREISE.**
METHOD FOR OPTIMIZING A FURNACE CAMPAIGN
PROCÉDÉ D'OPTIMISATION DE LA CAMPAGNE D'UN FOUR

(30) Priorität: 20.03.2008 DE 102008015252; 07.07.2008 DE 102008031959
(43) Veröffentlichungstag der Anmeldung: 22.12.2010
(73) Patentinhaber: Geib, Uwe, 82377 Penzberg (DE)
(72) Erfinder: Geib, Uwe, 82377 Penzberg (DE)
(86) Internationale Anmeldenummer: PCT/DE2009/000377
(87) Internationale Veröffentlichungsnummer: WO 2009/115087

(56) Entgegenhaltungen:
- EP-A- 1 849 752
- DE-C- 855 747
- GB-A- 936 462
- JP-A- 63 270 322
- US-A1- 2004 069 192
- "ATTREMPAGE D'UN FOUR DE VERRE/GLASS FURNACE HEATING" VERRE, INSTITUT DU VERRE, PARIS, FR, Bd. 8, Nr. 3, 1. Juni 2002 (2002-06-01), Seiten 28-31, XP001123092 ISSN: 0984-7979

## Beschreibung

Die Erfindung bezieht sich auf ein Verfahren und eine Vorrichtung zur Verlängerung der Ofenreise, durch Vermeidung von Rissen in den Steinen und Abplatzen von Teilen der Steine in einem Schmelzofen.
Dieses wird dadurch erreicht, indem die maximal zulässigen Kräfte, Drücke und Momente der verwendeten Steine im Schmelzofen gegeneinander und/oder zwischen den Steinen des Schmelzofens und der Verankerung, unterschritten bleiben, durch Messung der KräftelDrücke/Momente der Steine untereinander und/oder der Steine gegen die Andruckelemente der Verankerung, der Auswertung der Daten und dem automatischen Nachlassen oder Anziehen der Andruckelemente, insbesondere beim Antempem des Schmelzofens, sowie beim Abtempem.

Ein derartiger Ofen ist unter anderem aus der Druckschrift US 2004/0069192 A1 bekannt.

Bisherige Anlagen im Bereich der Glasschmelztechnik sind Ofenanlagen, die aus ausgewählten feuerfesten Baustoffen aufgebaut sind. Um die einzelnen Bauteile in ihrer festgelegten Position zu halten und die in manchen Bereichen erheblichen Kräfte abzufangen, sind umfangreiche Stahlkonstnrktionen notwendig, die unter dem Begriff Verankerungen zusammengefasst werden.

Ausgangsbasis aller Verankerungen bildet bei Glasschmelzwannen der auf Pfeilern und Längsträgers ruhende Rost aus Breitflanschträgern. Das vornehmlich aus Palisadensteinen aufgebaute Wannenbecken muss möglichst fugendicht angetempert und so fixiert werden, dass es vom hydrostatischen Druck der Glasschmelze nicht auseinander geschoben wird. Meist werden Rundstäbe verwendet, die an den Tragstützen befestigt sind und über Winkel- und U-Eisen die Wannensteine abstützen. Die Einstellung kann über die als Schraubspindeln ausgebildete Rundstäbe sind, vorgenommen werden.
Neben den Pfeilern mit dem Trägerrost gehört die Verankerung des Wannengewölbes zur wichtigsten Verankerung jedes Ofens. Die Wärmeausdehnungen beim Tempern müssen sicher beherrscht werden, und das Gewölbe kann nur dann die Ofenreise sicher durchstehen, wenn es rissfrei ist und keine Fugen aufweist. Man nimmt im Gewölbe lieber eine Pressung in Kauf als eine Fuge die nicht geschlossen wird.

Eine deutliche Verbesserung der Gewölbeverankerung brachte der Einsatz von Tellerfederpakete zwischen Ankereisen und Pendelstütze. Die Federn verhindern, dass die Gewölbekräfte unzulässig stark ansteigen, auch wenn die Ankerschrauben, nicht rechtzeitig nachgelassen werden.
Voraussetzung für ein erfolgreiches Antempern ist die Kenntnis der Wärmedehnung der verwendeten feuerfesten Baustoffe, mit Beachtung der Längenänderungen bei der Kristallumwandlung.
Es gilt zwischen den tragenden Ankerungen mit den Andruckelementen, die dauernd statisch belastet sind, wie Abstützung des Gewölbes, Tragen einzelner Ofenbauteile und den Halteankerungen mit den Andruckelementen, zu unterscheiden. Die Halteankerungen haben nur die Aufgabe, den Wärmedehnungen des Mauerwerkes beim Tempern, Auskühlen und Wiederanwärmen entgegen zu wirken, damit die Standfestigkeit und Gasdichtheit des Mauerwerks gewährleistet ist.

### Aufgabe:

Das Nachlassen, bzw. das Anziehen, der Andruckelemente erfolgt nach Erfahrung und Tabellen. Hierbei können Fugen bzw. unzulässig hohe Kräfte/Drücke/Momente auf die Steine entstehen, wodurch sich Risse in den Steinen bilden bzw. Teile der Steine abplatzen, welches die Lebensdauer (Ofenreise) des Glasschmelzofens drastisch reduziert.

Der Erfindung liegt deshalb die Aufgabe zugrunde, ein Verfahren mit Regelung und eine Vorrichtung anzugeben, mit der die Ofenreise von Glasschmelzöfen verlängert wird, indem unzulässig hohe Kräfte/Drücke/Momente auf die Steine unterbunden werden.

Die Aufgabe der Erfindung wird durch das Kennzeichen der Ansprüche 1 bis 8 gelöst.

Die jeweiligen Ausführungsbeispiele werden in den Unteransprüchen präzisiert.

Die durch die Erfindung erreichten Vorteile sind im wesentlichen darin zu sehen, dass die auf die Steine auftretenden Kräfte/Drücke/Momente immer unterhalb der maximal zulässigen Werte der Steine bleiben. Risse in den Steinen und das hieraus resultierende Abplatzen von Teilen der Steine durch unzulässig hohe Kräfte/Drücke/Momente auf die Steine wird hiermit sicher unterbunden.

Unversehrte Steine weisen eine höhere Resistenz gegenüber chemischen Reaktionen auf und halten dem mechanischen Abrieb des Glases besser stand. Die Ofenreise wird hierdurch erheblich verlängert, bei gleichzeitiger Einhaltung der Vermeidung von Fugen zwischen den Steinen.

### Beschreibung:

Die Erfindung, wie sie in den Ansprüchen 1 bis 8 und in den abhängigen Ansprüchen gekennzeichnet ist, löst die Aufgabe, das Entstehen von Rissen in den Steinen (4 bis 8) oder das Abplatzen von Teilen der Steine (4 bis 8), sowie Fugen zwischen den Steinen (4 bis 8) des Schmelzofens, insbesondere beim An- bzw. Abtempem zu unterbinden und hierdurch eine längere Ofenreise zu ermöglichen, indem die auftretenden Kräfte/Drücke/Momente zwischen den Steinen (4 bis 8) des Schmelzofens und/oder zwischen den Steinen (4 bis 8) des Schmelzofens und den Andruckelementen (12a, 13) der Verankerung (1 bis 3) gemessen werden, eine Auswertung der gemessenen Werte erfolgt und die Andruckelemente (12a, 13) je nach Auswertung der Werte automatisch angezogen oder nachgelassen werden.

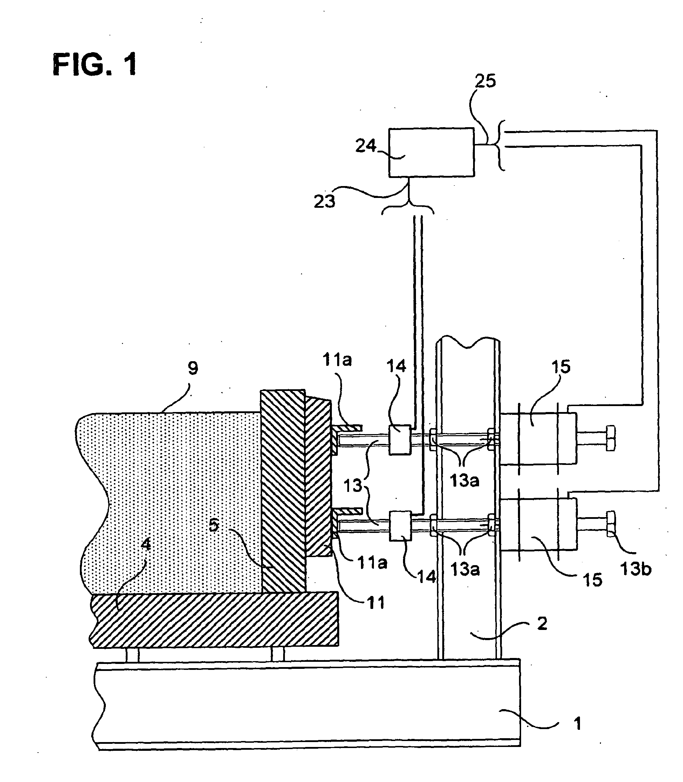

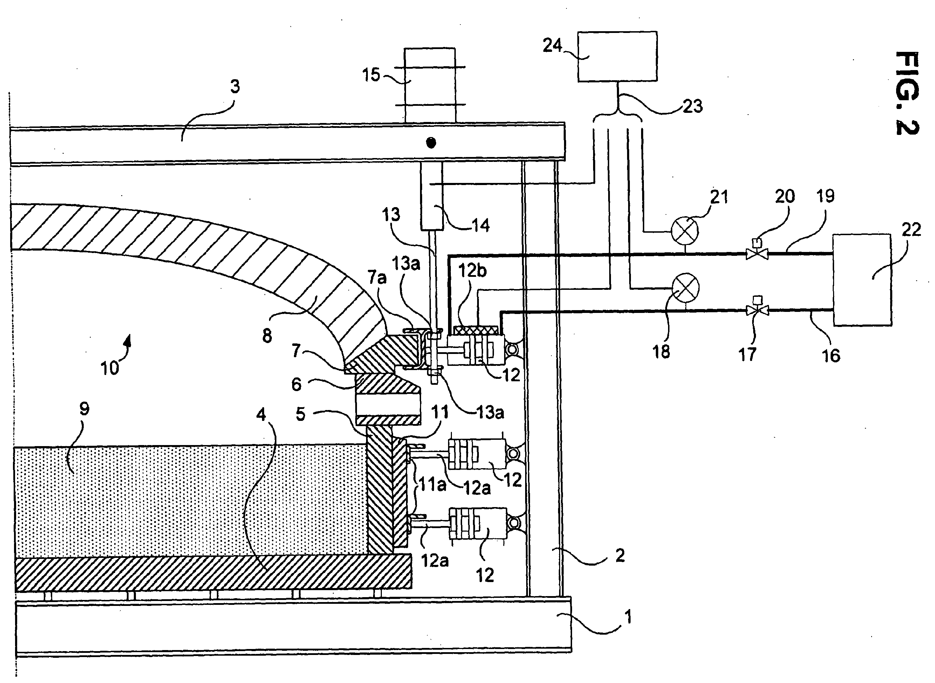

Fig. 1 zeigt das Verfahren nach Anspruch 1 und die Vorrichtung nach Anspruch 5 einer bevorzugten Ausführungsform so ausgebildet, dass die Regelstrecke und die gesamte Vorrichtung auf bestehende Ofenkonstruktionen, z. B. für den Tempervorgang, aufgesetzt werden kann.
Fig. 1 zeigt einen Ausschnitt eines Schnittes durch den Ofenraum; der hydrostatische Druck, der von der Glasschmelze (9) auf die Seitenwand der Schmelzwanne (5) über die Zwischenwand (11) mit den Auflageeinheiten (11a) auf das Andruckelement (13), in diesem Fall als Bewegungsschraube (13) ausgelegt, verübt wird, wird über die Führungsgewinde der Bewegungsschraube (13a) auf die Verankerung der Seite (2) übertragen. Mittels einer Kraft-/Drucksensorik (14), wird die/der auf die Bewegungsschraube (13) ausgeübte Kraft/Druck gemessen und die gewonnenen Daten über die Steuerleitung der Sensorik (23) an die Datenauswerte- und Steuereinheit (24) übermittelt und die Ergebnisse der Auswertung als Steuerimpulse, über die Steuerleitung der Aktoren (24) an die motorbetriebenen Stellantriebe (15) weitergeleitet, um hierdurch eine Axialverschiebung der Bewegungsschraube (13) um die Schraubenachse durchzuführen, wodurch die/der auf die Bewegungsschraube (13) ausgeübte Kraft/Druck sich verändert und hierdurch die Einhaltung der Grenzwerte von Werkstoffkenndaten der Steine (4 bis 8) sicher gewährleistet ist, so dass ein Entstehen von Rissen in den Steinen (4 bis 8) und/oder das Abplatzen von Teilen der Steine (4 bis 8) des Schmelzofens aufgrund einer unzulässig hohen Pressung der Steine (4 bis 8) unterbunden bleibt und Fugen, durch Einhaltung von Mindestwerten, unterbunden werden.
Ein weiteres Verfahren einer bevorzugten Ausführungsform nach Fig. 2 kann so ausgebildet sein, dass die Regelstrecke und die gesamte Vorrichtung als Elemente während der gesamten Ofenreise dauerhaft verbleiben und Bauteile des Ofens darstellen.
Fig. 2 zeigt einen Teilschnitt durch den Ofenraum; der hydrostatische Druck, der von der Glasschmelze (9) auf die Seitenwand der Schmelzwanne (5) über die Zwischenwand (11) mit den Auflageeinheiten (11a) auf die Andruckelemente (12a, 13), die Kolbenstange (12a) des
Hydraulikzylinder (12), die auch durch entsprechende, dem Fachmann geläufige Alternativen, z. B. pneumatisch oder andere hydrostatische Andruckelemente, die mit der Verankerung der Seite (2) verbunden sind, ausgeübt wird, erzeugt in dem Hydraulikzylinder (12) einen Druck, der über die Hydraulikleitung-A (16) übertragen wird.
Mittels dem Drucksensor-A (18) wird der auf dem Hydraulikzylinder (12) ausgeübte Druck ermittelt und die Daten über die Steuerleitung der Sensorik (23) an die Datenauswert- und Steuereinheit (24) übermittelt, die Ergebnisse der Auswertung als Steuerimpulse über die Steuerleitung der Aktoren (24) an die Druckregelventile-A (17) weitergeleitet, die durch die Hydraulikleitung-A (16) von der hydraulischen regelbaren Druckerzeugung mit Schaltlogik (22) mit entsprechend druckbeaufschlagter Hydraulikflüssigkeit versorgt wird, um hierdurch eine Axialverschiebung der Kolbenstange (12a) des Hydraulikzylinder (12) durchzuführen, wodurch der auf den Hydraulikzylinder (12) ausgeübte Druck sich verändert und hierdurch die Einhaltung der Grenzwerte von Werkstofflcenndaten der Steine (4 bis 8), durch die Regelstrecke, sicher gewährleistet wird. Das Gewölbe (8), das freitragend ausgebildet ist, wird durch den Gewölbewiderlagerstein (7) mit dem Zwischenhalter (7a) an der Bewegungsschraube (13) getragen, die Beschreibung der Ausführung wurde weiter vorn im Text erläutert, das Gewicht des Gewölbes (8) und die damit verbundene Flächenpressung auf den Brennerstein (6) kann durch das Verfahren und die Vorrichtung begrenzt und fugenlos eingestellt werden.
Neben einer Auswahl von bestimmten Verankerungen (1 bis 3) oder der Ausrüstung aller Verankerungen (1 bis 3) zum automatischen, geregelten Nachlassen oder Anziehen der Andruckelemente (12a, 13), besteht die Möglichkeit einer zeitlichen Beschränkung, z. B. zum Antempern, wie in Fig. 1 dargestellt, als auch der dauerhafte Einsatz des Verfahrens und der Vorrichtung als ein Bestandteil des Ofens.
Das Einbeziehen weiterer messbare Faktoren, wie Temperatur im, am und um den Ofen oder den Steinen (4 bis 8) chemische Zusammensetzung der Abgase und/oder der Schmelze, sowie weitere Daten aus dem Druckübertragungsmedium wie z. B. Hydraulikflüssigkeit, Druckluft, der verwendeten Werkstoffe und der Umgebung in die Auswertung zur Regelung der Andruckelemente (12a, 13), bietet weitere Möglichkeiten einer genaueren Regelung und ist auch im Notfall, z. B. durch automatisches Einleiten des Abtempervorganges, ohne Beschädigung der Ofenbauteile, einsetzbar oder kann durch Anomalien von Daten vorzeitigen Verschleiss von Bauteilen oder die Überschreitung von Grenzwerten anzeigen.
Selbstverständlich ist es dem Fachmann klar, dass die Datenermittlung in analoger oder digitaler Form erfolgen kann, ebenso die Auswertung der Daten und die Weiterleitung der Ergebnisereignisse, die Verschaltung kann als Netz, in Sektionen oder im Einzelbetrieb erfolgen. Es ist dem Fachmann für HydrauliklPneumatik bekannt, das nicht alle Hydraulik/Pneumatikzylinder von einem Druckerzeugungselement angetrieben werden müssen, sondern in Gruppen zusammengefasst, mit entsprechenden Vorschaltelementen, betrieben werden kann. Es kann in Einzelfällen sogar sinnvoll sein, jedem Andruckelement (12a) ein eigenes Druckerzeugungselement zuzuordnen.
Die Anwendung von Zug- als auch Druckkräften der Andruckelemente (12a, 13) gegenüber den Steinen (4 bis 8) ermöglicht eine translatorische Bewegung in eine bestimmte Richtung und wieder zurück, wodurch einzelne Steine (4 bis 8) oder Sektionen zu Barrieren, zum Erzwingen einer Glasströmung im Glasbad (9) oder Wirbel und Druckregelmöglichkeiten im Oberofen (10) oder Regelung des Abgasdruckes, durch Veränderung des Durchlassquerschnittes, der Abgase aus dem Ofen, zu ermöglichen.
In Fig.2 ist mit der Hydraulikleitung-B (19), dem Druckregelventil-B (20) und dem Drucksensor-B (21), deren Funktion weiter vom im Text für die Hydraulikleitung-A (16) erläutert wurde, und vorteilhaft mit einer Abstandsmessung durch den Weggeber (12b), der im Fall einer Bewegungsschraube (13) auch ein Drehgeber sein kann, die Möglichkeit einer geregelten translatorischen Bewegung des Andruckelements (12a, 13), hier der Kolbenstange (12a), dargestellt, wodurch mittels einer, dem Fachmann geläufigen Verbindung, zwischen den Steinen (4 bis 8) und den Andruckelementen (12a, 13), eine translatorische Verschiebung der Steine (4 bis 8) durch die Verstellung der Andruckelemente (12a, 13) ermöglicht wird.

Die Ansprüche beschränken sich hierbei nicht ausschliesslich auf das Glasschmelzen, auch weitere Bereiche der Glasherstellung, wie der Läuterteil und Homogenisierungsteil, als auch die Bereiche des Metallschmelzens und der Mineralschmelzens unterliegen den Ansprüchen.

### Bezugszeichenliste:

- 1.: Verankerung des Bodens
- 2.: Verankerung der Seite
- 3.: Verankerung der Decke
- 4.: Boden der Schmelzwanne
- 5.: Seitenwand der Schmelzwanne
- 6.: Brennerstein
- 7.: Gewölbewiderlagerstein
- 7a: Zwischenhalter
- 8.: Gewölbe
- 9.: Glasbad
- 10.: Oberofen
- 11.: Zwischenwand
- 11 a.: Auflageeinheit
- 12.: Hydraulikzylinder
- 12a: Kolbenstange des Hydraulikzyli-nders
- 12b: Weggeber/Abstandsmesseinheit
- 13.: Bewegungsschraube
- 13a.: Führungsgewinde der Bewegungsschraube
- 13b.: Kopf der Bewegungsschraube; für manuelle Verstellung
- 14.: Kraft-/Drucksensorik
- 15.: Motorbetriebener Stellantrieb
- 16.: Hydraulikleitung-A
- 17.: Druckregelventil-A
- 18.: Drucksensor-A
- 19.: Hydraulikleitung-B
- 20.: Druckregelventil-B
- 21.: Drucksensor-B
- 22.: Hydraulische Druckerzeugung mit Schaltlogik
- 23.: Steuerleitung der Sensorik
- 24.: Datenauswerte- und Steuereinheit
- 25.: Steuerleitung der Aktorik

## Patentansprüche

1. Verfahren für Schmelzöfen, in dem die verstellbaren Andruckelemente (12a, 13) zwischen den tragenden Ankerungen (1 bis 3) und den Steinen (4 bis 8) des Schmelzofens und/oder zwischen den Halteankerungen (1 bis 3) und den Steinen (4 bis 8) des Schmelzofens angezogen und nachgelassen werden können,
**dadurch gekennzeichnet, dass**
Druck- und Zugkräfte der Andruckelemente (12a, 13) und deren entsprechende Antriebe (12, 15) auf einzelne Steine (4 bis 8) oder Sektionen von Steinen (4 bis 8) automatisch geregelt durch die Datenauswerte- und Steuereinheit (24) eine translatorische Verschiebung von einzelnen Steinen (4 bis 8) oder Sektionen von Steinen (4 bis 8) ermöglichen, wobei die Andruckelemente (12a, 13) und deren entsprechende Antriebe (12, 15), nach sensorischer Ermittlung (14, 18, 21) der individuell örtlich anliegenden Kräfte/Drücke/Momente an einzelne Steine (4 bis 8) oder Sektionen von Steinen (4 bis 8) und der Auswertung der individuell örtlich anliegenden Kräfte/Drücke/Momente in der Datenauswerte- und Steuereinheit (24), geregelt Druck- oder Zugkräfte auf einzelne Steine (4 bis 8) oder Sektionen von Steinen (4 bis 8) ausüben können.

2. Verfahren nach Anspruch 1, **dadurch gekennzeichnet, dass** die individuell örtlich anliegenden Kräfte/Drücke/Momente zwischen einzelnen Steinen (4 bis 8) oder zwischen Sektionen von Steinen (4 bis 8) sensorisch ermittelt werden.

3. Verfahren nach Anspruch1, **dadurch gekennzeichnet, dass** die individuell örtlich anliegenden Kräfte/Drücke/Momente an einzelnen Steinen (4 bis 8) oder an Sektionen von Steinen (4 bis 8) indirekt, mittels Abstands- oder Spaltmessung, ermittelt werden.

4. Verfahren nach mindestens einem der vorherigen Ansprüche, **dadurch gekennzeichnet, dass** weitere Werte aus messbaren Faktoren mit in die Auswertung einbezogen werden, um eine genauere Regelung zu ermöglichen.

5. Vorrichtung für Schmelzöfen, in der die verstellbaren Andruckelemente (12a, 13) zwischen den tragenden Ankerungen (1 bis 3) und den Steinen (4 bis 8) des Schmelzofens und/oder zwischen den Halteankerungen (1 bis 3) und den Steinen (4 bis 8) des Schmelzofens durch Antriebe (12, 15) angezogen und nachgelassen werden können,
**dadurch gekennzeichnet, dass**
die Andruckelemente (12a, 13) und deren entsprechende Antriebe (12, 15) automatisch geregelt durch die Datenauswerte- und Steuereinheit (24) unter Einbeziehung der durch Sensoren (14, 18, 21) gemessenen Werte der individuell örtlich herrschenden Kräfte/Drücke/Momente an einzelnen Steinen (4 bis 8) oder Sektionen von Steinen (4 bis 8), und möglicher weiterer gemessener Faktoren, und Auswertung der gemessenen Werte/Faktoren in der Datenauswerte- und Steuereinheit (24), eine geregelte Druck- oder Zugkraft auf einzelne Steine (4 bis 8) oder Sektionen von Steinen (4 bis 8) ausüben können, um so eine automatisch geregelte translatorische Verschiebung von einzelnen Steinen (4 bis 8) oder Sektionen von Steinen (4 bis 8) durch die Andruckelemente (12a, 13) und deren entsprechende Antriebe (12, 15) mittels Druck- und Zugkräften zu erreichen.

6. Vorrichtung nach Anspruch 5, **dadurch gekennzeichnet, dass** die Antriebe (12, 15) Hydraulikzylinder (12) sind.

7. Vorrichtung nach Anspruch 5, **dadurch gekennzeichnet, dass** die Antriebe (12, 15) pneumatische Elemente sind.

8. Vorrichtung nach Anspruch 5, **dadurch gekennzeichnet, dass** die Antriebe (12, 15) motorbetriebene Stellantriebe (15) sind.

## Claims

1. A Method for melting furnaces in which adjustable contact elements (12a, 13) can be tightened and/or released between supporting anchoring (1 to 3) and stones (4 to 8) of the melting furnace and/or between support anchorings (1 to 3) and the stones (4 to 8) of the melting furnace,
**characterized in that**
pressure forces and tensile forces of the contact elements (12a, 13) and their corresponding drives (12, 15) on individual stones (4 to 8) or on sections of stones (4 to 8) enable a translational displacement of individual stones (4 to 8) or of sections of stones (4 to 8) automatically controlled by a data analysis and control unit (24), wherein the contact elements (12a, 13) and their corresponding drives (12, 15) can exercise controlled pressure forces or tensile forces on individual stones (4 to 8) or on sections of stones (4 to 8), after sensory determination (14, 18, 21) of individually locally applied forces/pressures/momentums at individual stones (4 to 8) or at section of stones(4 to 8) and data analysis of the individually locally applied forces/pressures/momentums in a data analysis and control unit (24).

2. The method of claim 1, **characterized in that** the individually locally applied forces/pressures/momentums between individual stones (4 to 8) or between sections of stones (4 to 8) are determined by sensors.

3. The method of claim 1, **characterized in that** the individually locally applied forces/pressures/momentums at individual stones (4 to 8) or on sections at stones (4 to 8) are determined indirectly by distance or gap determination.

4. The method of any one of the preceding claims, **characterized in that** additional values of measurable parameter are considered in the analysis to enable a more precise control.

5. An apparatus for melting furnaces, in which adjustable contact elements (12a, 13) between supporting anchorings (1 to 3) and stones (4 to 8) of the melting furnace and/or
between support anchorings (1 to 3) and the stones (4 to 8) of the melting furnace can be tightened and released,
**characterized in that**
the contact elements (12a, 13) and their corresponding drives (12, 15) can exercise, automatically controlled by a data analysis and control unit (24) under use of values of individual locally applied forees/pressures/znomentums at individual stones (4 to 8) or at sections of stones (4 to 8) determined by sensors (14, 18, 21), and possibly further determined parameters, and analysis of the determined values/parameters in the data analysis and control unit (24), a controlled pressure force or tensile force on individual stones (4 to 8) or on sections of stones (4 to 8) for obtaining an automated controlled translational displacement of individual stones (4 to 8) or of sections of stones (4 to 8) by the pressure elements (12a , 13) and their corresponding drives (12, 15) using pressure forces and tensile forces.

6. The apparatus of claim 5, **characterized in that** the drives (12, 15) are hydraulic cylinders (12).

7. The apparatus of claim 5, **characterized in that** the drives (12, 15) are pneumatic elements.

8. The apparatus of claim 5, **characterized in that** the drives (12, 15) are motor driven actuators (15).

## Revendications

1. Procédé pour four à fusion, dans lequel des éléments de contact ajustable (12a, 13) entre des ancres de support (1 à 3) et des pierres (4 à 8) du four à fusion et / ou entre des ancres de maintien (1 à 3) et des pierres (4 à 8) du four à fusion peuvent être resserrés et libérés,
**caractérisé en ce que**,
des forces de traction et de poussée des éléments de contact (12a, 13) et de leurs entrainements correspondants sur une pierre unique (4 à 8) ou des sections de pierres (4 à 8), réglées automatiquement au moyen d'une unité de commande et d'exploitation de données (24), rendent possible un déplacement en translation de pierres uniques (4 à 8) ou de sections de pierres (4 à 8), dans lequel les éléments de contacts (12a, 13) et leurs entrainements correspondants (12, 15), après détermination par capteur (14, 18, 21) des moments / pressions / forces ayant lieu localement et individuellement au niveau d'une pierre unique (4 à 8) ou de sections de pierres (4 à 8), et après exploitation des moments / pressions / forces ayant lieu localement et individuellement dans l'unité de commande et d'exploitation de données (24), peuvent exercer des forces de traction ou de poussée ajustées sur des pierres uniques (4 à 8) ou des sections de pierres (4 à 8).

2. Procédé selon la revendication 1, **caractérisé en ce que** les moments / pressions / forces ayant lieu localement et uniquement entre des pierres uniques (4 à 8) ou des sections de pierre (4 à 8) peuvent être mesurés par un / des capteurs.

3. Procédé selon la revendication 1, **caractérisé en ce que** les moments / pressions / forces ayant lieu localement et uniquement au niveau de pierre unique (4 à 8) ou au niveau de sections de pierres (4 à 8) peuvent être mesurés indirectement, au moyen de mesure d'espacement ou de distance.

4. Procédé selon l'une quelconque des revendications précédentes, **caractérisé en ce que** d'autres valeurs de facteurs mesurables peuvent être prises en compte dans l'exploitation, pour obtenir un réglage plus fin.

5. Dispositif pour four à fusion, dans lequel des éléments de contact ajustable (12a, 13) entre des ancres de support (1 à 3) et des pierres (4 à 8) du four à fusion et / ou entre des ancres de maintien (1 à 3) et des pierres (4 à 8) du four à fusion, peuvent être resserrés et libérés au moyen d'entrainements (12, 15),
**caractérisé en ce que**
les éléments de contact (12a, 13) et leurs entrainements correspondants (12, 15), réglés automatiquement au moyen d'une unité de commande et d'exploitation de données (24), sous intégration des données mesurées par des capteurs (14, 18, 21) de moments / pressions / forces dominant localement individuellement au niveau de pierre unique (4 à 8) ou de sections de pierres (4 à 8), et de facteurs mesurés additionnels possibles, et exploitation des valeurs mesurées/facteurs dans l'unité de commande et d'exploitation de données (24), peuvent exercer une force de traction ou de poussée réglée sur une pierre unique (4 à 8) ou des sections de pierre (4 à 8), afin d'obtenir un déplacement de translation réglé automatiquement, de pierres uniques (4 à 8) ou de sections de pierres (4 à 8), au moyen des éléments de contact (12a, 13) et de leur actionnements correspondants (12, 15), au moyen de forces de traction et de poussée,

6. Dispositif selon la revendication 5, **caractérisé en ce que** les entrainements (12, 15) sont des cylindres hydrauliques (12).

7. Dispositif selon la revendication 5, **caractérisé en ce que** les entrainements (12, 15) sont des éléments pneumatiques.

8. Dispositif selon la revendication 5, **caractérisé en ce que** les entrainements (12, 15) sont des servomoteurs (15) soutenus par des moteurs.
